(19) Europäisches Patentamt
European Patent Office
Office européen des brevets

(11) **EP 2 398 681 B1**

(12) **EUROPÄISCHE PATENTSCHRIFT**

(45) Veröffentlichungstag und Bekanntmachung des Hinweises auf die Patenterteilung:
**26.02.2014 Patentblatt 2014/09**

(21) Anmeldenummer: **09796721.0**

(22) Anmeldetag: **21.12.2009**

(51) Int Cl.:
***B60T 8/1755*** (2006.01)  ***B60T 8/24*** (2006.01)

(86) Internationale Anmeldenummer:
**PCT/EP2009/067662**

(87) Internationale Veröffentlichungsnummer:
**WO 2010/094364 (26.08.2010 Gazette 2010/34)**

(54) **VERFAHREN ZUR FAHRZEUGSTABILISIERUNG MIT INTEGRIERTER FUNKTION ZUR UMKIPPVERMEIDUNG**

VEHICLE STABILITY ENHANCEMENT METHOD WITH INTEGRATED ROLLOVER PREVENTION FUNCTION

PROCÉDÉ DE STABILISATION POUR VÉHICULE À FONCTION INTEGRÉE DE PRÉVENTION DE RENVERSEMENT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **17.02.2009  DE 102009000922**

(43) Veröffentlichungstag der Anmeldung:
**28.12.2011  Patentblatt 2011/52**

(73) Patentinhaber: **Robert Bosch GmbH**
**70442 Stuttgart (DE)**

(72) Erfinder:
• **GAUGER, Andreas**
**Brackenheim 74336 (DE)**
• **ANTONOV, Sergiy**
**Heilbronn 74072 (DE)**

(56) Entgegenhaltungen:
**EP-A1- 1 837 262      WO-A1-03/006293
DE-A1- 10 130 663      DE-A1- 10 329 278
DE-A1- 10 360 115      DE-A1- 10 360 732
DE-A1- 19 830 189**

EP 2 398 681 B1

**Beschreibung**

Stand der Technik

Die Erfindung betrifft eine Vorrichtung zur Regelung der Fahrdynamik eines Fahrzeugs gemäß dem Oberbegriff des Anspruchs 1, sowie ein entsprechendes Verfahren zur Regelung gemäß dem Oberbegriff des Anspruchs 3.

Bekannte Fahrdynamikregler, wie z. B. ESP, regeln üblicherweise die Gierrate und den Schwimmwinkel eines Fahrzeuges. Hierzu muss bestimmt werden, wie sich das Fahrzeug verhalten soll (Sollwerte) und wie es sich tatsächlich verhält (Istwerte). Die Sollwerte werden i. d. R. so berechnet, dass das Fahrzeug der vom Fahrer durch die Lenkrad- und Gaspedalstellung vorgegebenen Bewegungsbahn (Fahrerwunsch) möglichst genau folgt. Problematisch dabei ist, dass der Fahrdynamikregler das Fahrzeug auch in umkippkritischen Situationen auf die vom Fahrer gewünschte Bewegungsbahn regelt. Dadurch kann es vorkommen, dass das Fahrzeug eine zu hohe Querbeschleunigung erfährt und umkippt.

Um das Umkippen eines Fahrzeugs zu verhindern, sind separate Vorrichtungen bekannt, die im Falle einer zu hohen Querbeschleunigung in den Fahrbetrieb eingreifen und das Fahrzeug z. B. durch automatische Brems- oder Lenkeingriffe stabilisieren. Aus der WO 99/37516 ist beispielsweise bekannt, die Kipptendenz eines Fahrzeugs zu bestimmen und darauf basierend die Querdynamik des Fahrzeugs so zu regeln, dass das Fahrzeug nicht umkippt. Aus der WO 2006/018349 A1 ist es bekannt, ein Umkippen basierend auf verschiedenen vordefinierten Fahrzuständen für ein Fahrzeug zu erkennen. Allen Systemen ist jedoch gemein, dass sie neben dem Fahrdynamikregler als separate Vorrichtung mit eigener Sensorik und eigener Signalverarbeitung realisiert sind und daher einen erheblichen zusätzlichen Aufwand bedeuten.

Aus der DE 101 30 663 A1 ist ein ESP-Regler zum Regeln der Querdynamik eines Fahrzeugs bekannt, der einen Sollwertgeber umfasst, der eine Sollgröße für den Regler vorgibt. Der Sollwertgeber umfasst ferner Mittel zum Beschränken der Sollgröße auf einen Maximalwert. Die DE 103 60 115 A1, EP 1 837 262 A1, DE 103 29 278 A1 und die DE 103 60 732 A1 offenbaren ebenfalls verschiedene Fahrdynamikregler zur Regelung der Querdynamik eines Fahrzeugs, mit einem Sollwertgeber, der die Sollgröße auf einen Maximalwert beschränkt, um die Querbeschleunigung des Fahrzeugs nicht zu groß werden zu lassen. Die aus dem Stand der Technik bekannten Fahrdynamikregler enthalten jedoch relativ komplizierte Algorithmen zur Berechnung der Sollgröße.

Offenbarung der Erfindung

Insofern ist es Aufgabe der Erfindung eine Vorrichtung und ein Verfahren zu schaffen, mit der bzw. dem eine Funktion zur Umkippvermeidung wesentlich einfacher realisiert werden kann.

Gelöst wird die Aufgabe gemäß der Erfindung durch die Merkmale der unabhängigen Ansprüche.

Ein wesentlicher Aspekt der Erfindung besteht darin, die Funktion zur Umkippvermeidung in einen herkömmlichen Fahrdynamikregler, wie z. B. ESP, mit zu integrieren, und das Fahrzeug mit Hilfe des modifizierten Fahrdynamikreglers auf eine Bewegungsbahn zu zwingen, die einen größeren Kurvenradius hat als der vom Fahrer gewünschte. Dadurch wird die Querbeschleunigung auf das Fahrzeug begrenzt. Gemäß der Erfindung ist hierzu ein Sollwertgeber vorgesehen, der unter Berücksichtigung des Fahrerwunsches wenigstens einen Sollwert für den Regler ermittelt. In kritischen Fahrsituationen, in denen die Querbeschleunigung auf das Fahrzeug zu groß werden würde - sofern der Fahrdynamikregler dem Fahrerwunsch folgen würde - wird der Sollwert gemäß der Erfindung auf einen Maximalwert begrenzt. Der Maximalwert ist dabei so bemessen, dass die Querbeschleunigung des Fahrzeugs einen Schwellenwert nicht überschreitet und das Fahrzeug somit zumindest nicht umkippt. In Grenzsituationen, in denen der Fahrer einen zu kleinen Kurvenradius bei zu hoher Geschwindigkeit vorgibt, folgt das Fahrzeug dann nicht mehr genau der vom Fahrer gewünschten Bewegungsbahn, sondern einer Bahn mit größerem Radius und vollzieht eine Gierbewegung mit kleinerer Gierrate. Auf diese Weise wird dem Aufbau einer zu hohen Querbeschleunigung sehr frühzeitig und harmonisch entgegengewirkt, so dass das Fahrzeug nicht mehr umkippt. Gemäß der Erfindung umfasst der Sollwertgeber ein mathematisches Modell, das eine Soll-Gierrate unter Berücksichtigung eines gemessenen Lenkwinkels, einer gemessenen Längsgeschwindigkeit und einer auf ein Vorder- und/oder Hinterrad des Fahrzeugs wirkenden Querkraft ermittelt, wobei das mathematische Modell, wenigstens einen der Querkraftwerte beschränkt, so dass die Querbeschleunigung des Fahrzeugs einen vorgegebenen Schwellenwert nicht überschreitet. Durch diese einfache Begrenzung des Regler-Sollwertes kann somit eine Funktion zur Umkippvermeidung gemeinsam mit einer Standard-Fahrdynamikregelung realisiert werden.

Der Schwellenwert der Querbeschleunigung kann z. B. als derjenige Wert definiert werden, bei dem das Fahrzeug umkippen würde. Es kann aber auch ein kleinerer Wert gewählt werden.

Ein "Fahrdynamikregler" gemäß der Erfindung ist vorzugsweise ein System, das wenigstens eine fahrdynamische Zustandsgröße, wie z. B. die Gierrate und/oder den Schwimmwinkel des Fahrzeugs regelt.

Gemäß der Erfindung wird der Sollwert in Abhängigkeit von der auf das Vorderrad und/oder auf das Hinterrad wirkenden Querkraft berechnet. Wenigstens eine der Querkräfte wird dabei auf einen Wert beschränkt, der so bemessen ist, dass die Querbeschleunigung des Fahrzeuges den erlaubten Schwellenwert nicht überschreitet. Vorzugsweise wird die Querkraft der Vorderräder beschränkt.

Kurze Beschreibung der Zeichnungen

Die Erfindung wird nachstehend anhand der beigefügten Zeichnungen beispielhaft näher erläutert. Es zeigen:

Fig. 1 ein Blockschaltbild einer Fahrdynamikregelung eines Fahrzeugs;

Fig. 2 eine schematische Ansicht eines Einspurmodells für ein Fahrzeug;

Fig. 3a ein Diagramm für einen Lenkwinkel über die Zeit;

Fig. 3b beispielhafte Zeitverläufe für den Wankwinkel eines Fahrzeuges mit und ohne einen erfindungsgemäßen Sollwertgeber.

Ausführungsformen der Erfindung

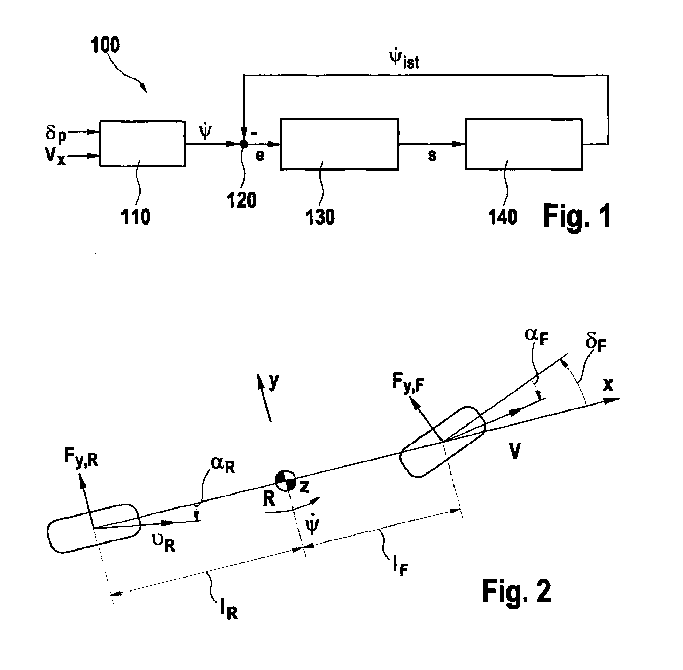

Fig. 1 zeigt einen Fahrdynamikregler 100 zur Regelung der Querdynamik eines Fahrzeugs mit einem Regelkreis. Der Fahrdynamikregler 100 umfasst einen Sollwertgeber 110, der hier eine Sollgierrate $\Psi$ für den eigentlichen Regler 130 berechnet. Der Sollwergeber 110 umfasst ein mathematisches Fahrzeugmodell (Algorithmus), wie z. B. ein aus dem Stand der Technik bekanntes Einspurmodell, das die Sollgierrate $\Psi$ unter Berücksichtigung des Lenkwinkels $\delta_F$ und der Längsgeschwindigkeit $v_x$ des Fahrzeugs berechnet. Die genannten Größen werden vorzugsweise gemessen.

Am Knoten 120 wird aus der Soll- und der Ist-Gierrate $\dot{\psi}$ bzw. $\dot{\psi}_{ist}$ die Regeldifferenz e berechnet, die an den Fahrdynamikregler 130 ausgegeben wird. Bei einer zu hohen Regeldifferenz berechnet der Fahrdynamikregler 130 für jedes Rad einen individuellen Bremseingriff s , der mittels der Radbremsen umgesetzt wird. Das Fahrzeug als Regelstrecke ist schematisch als Block 140 dargestellt.

Im Unterschied zu herkömmlichen Fahrdynamikreglern wird der Sollwert $\dot{\psi}$ hier auf einen Wert beschränkt, der maximal so groß ist, dass die Querbeschleunigung des Fahrzeugs sich nie über einen Schwellenwert aufbauen lässt. Der Schwellenwert der Querbeschleunigung ist dabei so bemessen, dass das Fahrzeug zumindest nicht umkippt.

Das Fahrzeugmodell des Sollwertgebers 110 ist in Fig. 2 gezeigt. Die zugehörigen Modellgleichungen zum Bestimmen der Sollgierrate $\dot{\psi}$ lauten:

$$\frac{d}{dt}v_y = \frac{1}{m}\left(F_{y,F}(\alpha_F)\cos(\delta_F) + F_{y,R}(\alpha_R)\right) - v_x\dot{\psi} \qquad (1)$$

$$\frac{d}{dt}\dot{\psi} = \frac{1}{J_z}\left(F_{y,F}(\alpha_F)l_F\cos(\delta_F) - F_{y,R}(\alpha_R)l_R\right) \qquad (2)$$

Zum Berechnen der Sollgierrate $\dot{\psi}$ benötigt der Sollwertgeber 110 neben fahrzeugspezifischen Größen, wie der Fahrzeugträgheit $J_z$ um die z-Achse, der Fahrzeugmasse $m$ und der Radabstände $l_F$ , $l_R$ der Vorder- und Hinterräder vom Fahrzeugschwerpunkt R auch Messgrößen wie den Lenkwinkel $\delta_F$ und die Längsgeschwindigkeit $v_x$. Außerdem sind zeitabhängige Größen wie die Querkraft $F_{y,F}$ der Vorderräder (Index F) und die Querkraft $F_{y,F}$ der Hinterräder (Index R) erforderlich, die sich aus den Messgrößen und aus vorangegangenen Lösungen der Modellgleichungen (1), (2) berechnen lassen. Ein zusätzlicher Sensor zur Bestimmung dieser Größen ist nicht unbedingt notwendig.

Die Querkräfte $F_{y,F}$, $F_{y,R}$ hängen nichtlinear vom jeweiligen Schräglaufwinkel $\alpha_F$ , $\alpha_R$ der einzelnen Räder ab. Sie können z. B. mit einer Kennlinie bestimmt werden. Die Schräglaufwinkel $\alpha_F$, $\alpha_R$ wiederum sind nichtlinear abhängig von der Sollgierrate $\dot{\psi}$ und der Quergeschwindigkeit $v_y$.

Der Sollwertgeber 110 berechnet mit den Modellgleichungen (1), (2) neben der Sollgierrate $\dot{\psi}$ auch die Quergeschwindigkeit $v_y$, sowie die Querbeschleunigung $a_y$ des Fahrzeugs.

Zur Bestimmung der aktuellen Sollgierrate $\dot{\psi}$ berechnet der Sollwertgeber 110 zunächst die aktuellen Schräglaufwinkel $\alpha_F$, $\alpha_R$ basierend auf der zuletzt berechneten Sollgierrate $\dot{\psi}$, sowie der zuletzt berechneten Quergeschwindigkeit $v_y$ und schlägt die zugehörigen Querkräfte $F_{y,F}$, $F_{y,R}$ auf die einzelnen Räder in der entsprechenden Kennlinie nach. Sofern die Querkräfte $F_{y,F}$, $F_{y,R}$ so groß sind, dass die Querbeschleunigung des Fahrzeugs einen Maximalwert $a_y^{max}$ überschreitet, wird wenigstens ein Querkraftwert beschränkt. Die Soll-Gierrate $\dot{\psi}$ wird dann auf Basis der beschränkten Querkraft $F^{max}$ berechnet. Dadurch das Einstellen dieser Soll-Gierrate mittels des Fahrdynamikreglers wird sichergestellt, dass das Fahrzeug nicht umkippt.

Die Querbeschleunigung des Referenz-Modells wird bestimmt durch

$$a_y = \frac{1}{m}\left(F_{y,F} + F_{y,R}\right) \tag{3}$$

Im vorliegenden Ausführungsbeispiel wird der Querkraftwert $F_{y,F}$ der Vorderräder beschränkt. Wenn $a_y^{max}$ die maximal zulässige Querbeschleunigung ist, ergibt sich die maximal erlaubte Querkraft $F_{y,F}^{max}$ aus (3) wie folgt:

$$F_{y,F}^{max} = m \cdot a_y^{max} - \left|F_{y,R}\right| \tag{4}$$

Der Sollwertgeber 110 ermittelt nun die Querkraft $F_{y,F}$ der Vorderräder und prüft, ob diese die maximale Querkraft $F_{y,F}^{max}$ überschreitet. Falls ja, legt er in den Modellgleichungen (1), (2) den beschränkten Wert $F_{y,F}^{max}$ zugrunde, andernfalls den tatsächlich ermittelten Wert $F_{y,F}$.

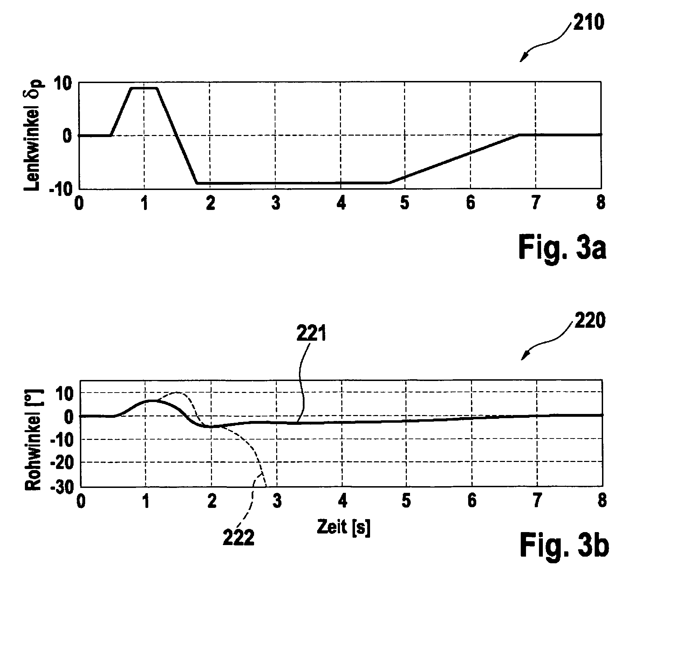

Die Fig. 3a und 3b zeigen den Verlauf verschiedener Messwerte bei einem Fahrzeug, das einmal mit Beschränkung und einmal ohne Beschränkung der Sollgierrate geregelt wird. Wie man aus dem Diagramm 210 für den Lenkwinkel $\delta_F$ sieht, fährt das Fahrzeug eine S-ähnliche Kurve.

Ohne Begrenzung der Sollgierrate $\dot{\psi}$ kippt das Fahrzeug beim Fahren der S-ähnlichen Kurve (siehe die gestrichelte Line 222 im Diagramm 220). Zunächst wankt das Fahrzeug um 10° in eine Richtung, dann bewegt es sich wieder zurück in die neutrale Lage, und wankt dann in die andere Richtung, wobei der Wankwinkel so groß wird, dass das Fahrzeug umkippt.

Mit einer Begrenzung der Sollgierrate $\dot{\psi}$ wankt das Fahrzeug beim gleichen Fahrmanöver (siehe die durchgezogene Line 221) zwar ebenfalls in beide Richtungen, der Wankwinkel bleibt jedoch in beiden Fällen kleiner als 10° und das Fahrzeug kippt nicht um.

## Patentansprüche

1. Vorrichtung zum Regeln der Fahrdynamik eines Fahrzeugs, umfassend einen Sollwertgeber (110) zum Vorgeben einer Soll-Gierrate ($\dot{\psi}$) für einen Gierratenregler (130), **dadurch gekennzeichnet, dass** der Sollwertgeber (110) ein mathematisches Modell umfasst, das die Soll-Gierrate ($\dot{\psi}$) unter Berücksichtigung eines gemessenen Lenkwinkels ($\delta_F$), einer gemessenen Längsgeschwindigkeit ($v_x$) und einer auf ein Vorder- und/oder Hinterrad des Fahrzeugs wirkenden Querkraft ($F_{y,F}$, $F_{y,R}$) ermittelt, wobei das mathematische Modell, wenigstens einen der Querkraftwerte ($F_{y,F}$, $F_{y,R}$) beschränkt, so dass die Querbeschleunigung des Fahrzeugs einen vorgegebenen Schwellenwert ($a_y^{max}$) nicht überschreitet.

2. Vorrichtung nach Anspruch 1, **dadurch gekennzeichnet, dass** der Schwellenwert kleiner als ein Grenzwert ist, bei dem das Fahrzeug umkippt.

3. Verfahren zum Regeln der Fahrdynamik eines Fahrzeuges, **gekennzeichnet durch** folgende Schritte:

   - Ermitteln einer Soll-Gierrate ($\dot{\psi}$) zur Regelung der Querdynamik des Fahrzeuges unter Berücksichtigung eines gemessenen Lenkwinkels ($\delta_F$), einer gemessenen Längsgeschwindigkeit ($v_x$) und einer auf ein Vorder- und/ oder Hinterrad des Fahrzeugs wirkenden Querkraft ($F_{y,F}$, $F_{y,R}$),

   - Beschränken wenigstens eines der Querkraftwerte ($F_{y,F}$, $F_{y,R}$), so dass die Querbeschleunigung des Fahrzeugs einen vorgegebenen Schwellenwert $\left(a_y^{max}\right)$ nicht überschreitet, und

- Berechnen der Soll-Gierrate ($\dot{\psi}$) basierend auf dem wenigstens einen beschränkten Querkraftwert ($F_{y,F}$, $F_{y,R}$).

**Claims**

1. Device for regulating the movement dynamics of a vehicle, comprising a setpoint value transmitter (110) for predefining a setpoint yaw rate ($\dot{\psi}$) for a yaw rate regulator (130), **characterized in that** the setpoint value transmitter (110) comprises a mathematical model which determines the setpoint yaw rate ($\dot{\psi}$) taking into account a measured steering angle ($\delta_F$), a measured longitudinal velocity ($v_x$) and a lateral force ($F_{y,F}$, $F_{y,R}$) acting on a front wheel and/or rear wheel of the vehicle, wherein the mathematical model limits at least one of the lateral force values ($F_{y,F}$, $F_{y,R}$) with the result that the lateral acceleration of the vehicle does not exceed a predefined threshold value ($a_y^{max}$).

2. Device according to Claim 1, **characterized in that** the threshold value is lower than a limiting value at which the vehicle tips over.

3. Method for regulating the movement dynamics of a vehicle, **characterized by** the following steps:

   - determining a setpoint yaw rate ($\dot{\psi}$) for regulating the lateral dynamics of the vehicle taking into account a measured steering angle ($\delta_F$), a measured longitudinal velocity ($v_x$) and a lateral force ($F_{y,F}$, $F_{y,R}$) acting on a front wheel and/or rear wheel of the vehicle,
   - limiting at least one of the lateral force values ($F_{y,F}$, $F_{y,R}$) with the result that the lateral acceleration of the vehicle does not exceed a predefined threshold value ($a_y^{max}$), and
   - calculating the setpoint yaw rate ($\dot{\psi}$) on the basis of the at least one limited lateral force value ($F_{y,F}$, $F_{y,R}$).

**Revendications**

1. Procédé de régulation de la dynamique de conduite d'un véhicule, comprenant un générateur de valeur de consigne (110) pour prédéfinir une vitesse de lacet de consigne ($\dot{\psi}$) pour un régulateur de vitesse de lacet (130), **caractérisé en ce que** le générateur de valeur de consigne (110) comprend un modèle mathématique qui détermine la vitesse de lacet de consigne ($\dot{\psi}$) en tenant compte d'un angle de direction mesuré ($\delta_F$), d'une vitesse longitudinale mesurée ($v_x$) et d'une force transversale ($F_{y,F}$, $F_{y,R}$) agissant sur une roue avant et/ou une roue arrière du véhicule, le modèle mathématique limitant au moins l'une des valeurs de force transversale ($F_{y,F}$, $F_{y,R}$) de telle sorte que l'accélération transversale du véhicule ne dépasse pas une valeur seuil prédéfinie $\left(a_y^{max}\right)$.

2. Dispositif selon la revendication 1, **caractérisé en ce que** la valeur seuil est inférieure à une valeur limite à laquelle le véhicule se renverse.

3. Procédé de régulation de la dynamique de conduite d'un véhicule, **caractérisé par** les étapes suivantes :

   - détermination d'une vitesse de lacet de consigne ($\dot{\psi}$) pour réguler la dynamique transversale du véhicule en tenant compte d'un angle de direction mesuré ($\delta_F$), d'une vitesse longitudinale mesurée ($v_x$) et d'une force transversale ($F_{y,F}$, $F_{y,R}$) agissant sur une roue avant et/ou une roue arrière du véhicule,
   - limitation d'au moins l'une des valeurs de force transversale ($F_{y,F}$, $F_{y,R}$), de telle sorte que l'accélération transversale du véhicule ne dépasse pas une valeur seuil prédéfinie $\left(a_y^{max}\right)$, et
   - calcul de la vitesse de lacet de consigne ($\dot{\psi}$) sur la base de l'au moins une valeur de force transversale limitée ($F_{y,F}$, $F_{y,R}$).

Fig. 1

Fig. 2

**Fig. 3a**

**Fig. 3b**

EP 2 398 681 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9937516 A
- WO 2006018349 A1
- DE 10130663 A1
- DE 10360115 A1
- EP 1837262 A1
- DE 10329278 A1
- DE 10360732 A1